(19) Europäisches Patentamt
European Patent Office
Office européen des brevets

(11) **EP 2 721 783 B1**

(12) **EUROPEAN PATENT SPECIFICATION**

(45) Date of publication and mention
of the grant of the patent:
**01.05.2019 Bulletin 2019/18**

(51) Int Cl.:
**H05B 37/02** *(2006.01)*      **H04L 12/40** *(2006.01)*
**H04L 12/24** *(2006.01)*

(21) Application number: **12733267.4**

(22) Date of filing: **15.06.2012**

(86) International application number:
**PCT/US2012/042583**

(87) International publication number:
**WO 2012/174328 (20.12.2012 Gazette 2012/51)**

(54) **SYSTEMS AND METHODS TO DETECT BUS NETWORK FAULT AND TOPOLOGY**

SYSTEME UND VERFAHREN FÜR DEN NACHWEIS VON BUSNETZWERKFEHLERN UND TOPOLOGIE

SYSTÈMES ET PROCÉDÉS POUR DÉTECTER ANOMALIE ET TOPOLOGIE DE RÉSEAU EN BUS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.06.2011   US 201113161321**
**15.06.2011   US 201113161349**

(43) Date of publication of application:
**23.04.2014   Bulletin 2014/17**

(60) Divisional application:
**14165404.6 / 2 760 165**

(73) Proprietor: **Osram Sylvania Inc.**
**Danvers, MA 01923 (US)**

(72) Inventors:
• **HOFFKNECHT, Marc**
**Newmarket, Ontario L3Y 4W1 (CA)**
• **ROJAS, Javier Orlando**
**Mississauga, Ontario L5V 2M6 (CA)**
• **O'HAGAN, Liam John**
**Walkerton, Ontario N0G 2V0 (CA)**

(74) Representative: **Viering, Jentschura & Partner mbB**
**Patent- und Rechtsanwälte**
**Am Brauhaus 8**
**01099 Dresden (DE)**

(56) References cited:
**US-A- 6 121 874      US-A1- 2002 108 076**

## Description

CROSS REFERENCE TO RELATED APPLICATIONS

DESCRIPTION

Background

Bus networks are used in a variety of fields and applications to interconnect devices and allow communication, power transmission, and other functionality. One such bus network is known as a Digital Addressable Lighting Interface (DALI), which is a bus architecture standard used in controlling devices in a building (such as sensors, lighting devices, and shades). DALI provides a two-wire bus that allows power to be supplied to, and communication between, devices on the bus. In the DALI architecture, the presence of voltage indicates a first state (i.e., a logical "1"), while the shorting of the two wires by any device on the bus indicates a second state (i.e., a logical "0"). In this manner, devices can use the two-wire DALI bus to communicate with each other. US 2002/0108076 A1 discloses the arts relevant to a system for determining the source of a fault within a bus. US 6,121,874 discloses the arts relevant to multi-station dangerous condition alarm systems.

Faults in a communication system can be numerous, and include wiring faults, short circuits between the conductors of the bus, open circuits, wire loops, breaks, and interference (e.g., from nearby motors or other devices). In some bus networks, such as a DALI lighting control bus, RS485 networks and others, nodes may branch off from a trunk. If the trunk is shorted, communication can be impossible and locating the fault tedious and time consuming.

Likewise, determining the manner in which the nodes of a bus network are interconnected (known as the "topology" of the network) is useful for a variety of purposes, but can be both difficult and time consuming using conventional systems and methods. In installations that include large numbers of nodes, such as a lighting control network, or installation with long wires, problems due to faults and determining bus topology can be exacerbated.

BRIEF SUMMARY

Embodiments in this disclosure address these and other issues. Among other things, embodiments in this disclosure help identify faults on a bus, as well as to determine the topology of a bus network. A system according to one embodiment includes a bus interface for connecting to a bus and a switch coupled to the bus interface, the switch configured to alternate between an open state and a closed state. The system is connected to the bus via the bus interface when the switch is in the closed state, and the system is disconnected from the bus via the bus interface when the switch is in the open state.

A method and a system according to the embodiment of the invention are described in claims 1 and 6.

It is to be understood that both the foregoing general description and the following detailed description are exemplary and explanatory only and are not restrictive of the disclosure, as claimed.

BRIEF DESCRIPTION OF THE DRAWINGS

A more complete understanding of the embodiments of the present disclosure may be derived by referring to the detailed description and claims when considered in connection with the following illustrative figures.

Figure 1 illustrates an exemplary bus device in accordance with various embodiments.
Figure 2 depicts an exemplary switch circuit for use in bus devices in accordance with various embodiments.
Figures 3A-3C illustrate a method for determining bus topology in accordance with various embodiments.
Figure 4 depicts a typical prior art transceiver section for a DALI node.

DETAILED DESCRIPTION

While exemplary embodiments in this disclosure are described in conjunction with the DALI bus architecture, this disclosure may be used in conjunction with any other suitable bus architecture.

The detailed description of exemplary embodiments herein makes reference to the accompanying drawings and pictures, which show the exemplary embodiment by way of illustration and its best mode. While these exemplary embodiments are described in sufficient detail to enable those skilled in the art to practice the disclosure, it should be understood that other embodiments may be realized and that logical and mechanical changes may be made without departing from the scope of the disclosure. Thus, the detailed description herein is presented for purposes of illustration only and not of limitation. For example, the steps recited in any of the method or process descriptions may be executed in any order and are not limited to the order presented. Moreover, any of the functions or steps may be outsourced to or performed by one or more third parties. Furthermore, any reference to singular includes plural embodiments, and any reference to more than one component may include a singular embodiment.

In the detailed description herein, references to "one embodiment", "an embodiment", "an example embodiment", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to effect such feature, structure, or characteristic in connection with other embodiments whether or not explicitly described. After reading the description, it will be apparent to one skilled in the relevant art(s) how to implement the disclosure in alternative embodiments.

In various embodiments, the methods described herein are implemented using the various particular machines described herein. The methods described herein may be implemented using the below particular machines, and those hereinafter developed, in any suitable combination, as would be appreciated immediately by one skilled in the art. Further, as is unambiguous from this disclosure, the methods described herein may result in various transformations of certain articles.

## EXEMPLARY DEVICE WITH FAULT ISOLATION SWITCH

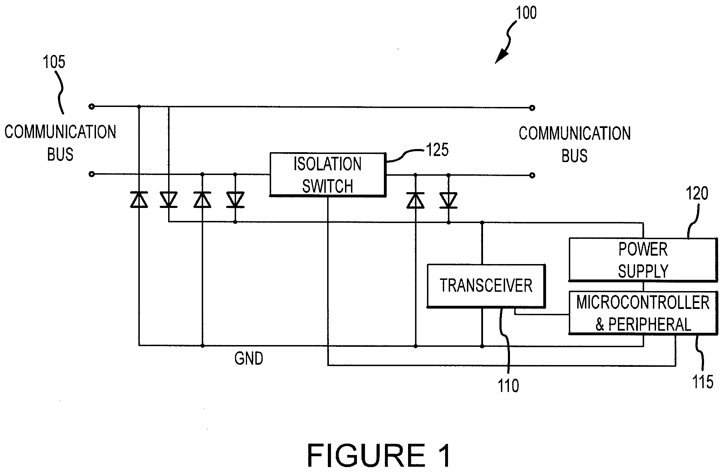

Figure 1 illustrates an exemplary embodiment of a network device 100 that can be used with a DALI network or other bus architectures. The device 100 may also be referred to herein as a "node." The device 100 includes a bus interface 105 and a transceiver 110 for transmitting and receiving data via the bus interface 105. The device 100 further includes a microprocessor and peripherals 115 for controlling the device 100 (peripherals may include, among other things, circuitry to create a dimming signal to an external ballast), and a power supply 120 for powering the device 100. The device 100 also includes a fault isolation switch 125 for connecting and disconnecting the device 100 from the bus via the bus interface 105.

Embodiments of this disclosure may operate in conjunction with any number and type of different devices on a bus. In the exemplary embodiment depicted in Figure 1, the device 100 may be any type of DALI-compatible device, such as a lighting device, sensor, keypad, and/or shade. The device 100 may be configured to perform any other suitable function. For example, the device 100 may be configured to act as a control device in order to facilitate communication between other devices on the bus. In one embodiment, the device 100 may function as a bus arbiter to declare the bus free for any other device(s) on the bus to commence communication (rather than instructing a specific node to respond). Devices according to other embodiments of this disclosure may also be configured to operate with bus architectures such as RS485, Controller Area Network (CAN), and/or Local Interconnect Network (LIN).

The device 100 may include any suitable bus interface 105. In the exemplary embodiment depicted in Figure 1, the bus interface 105 is configured to couple the device 100 to a two-conductor DALI communication bus or other two-conductor bus.

## FAULT ISOLATION SWITCH 125

The fault isolation switch 125 is coupled to the bus interface 105 and is configured to alternate between an open state and a closed state. When the fault isolation switch 125 is in the closed state, the device 100 is connected to the bus via the bus interface 105, and when the fault isolation switch 125 is in the open state, the device 100 is disconnected from the bus via the bus interface 105. In the exemplary embodiment depicted in Figure 1, the communication bus, to which the bus interface 105 connects, uses two conductors. Accordingly, two faults that may occur on this bus include an open circuit and a short circuit between the two conductors. In certain embodiments, the device 100 may be configured to couple to, for example, a CAT5 cable in which case additional open/short permutations could occur by virtue of the CAT5 cable having multiple conductors.

In the embodiment depicted in Figure 1, the fault isolation switch 125 allows the device 100 to be disconnected from the bus by interrupting one of the two signal wires of the communication bus. Among other things, the fault isolation switch 125 allows installers to isolate open circuits and short circuits. In the case of open circuits, communication to nodes behind, or subsequent to, the open circuit is not possible, thus the location of the open circuit can be identified by identifying the last communicating node on the bus. In the case of a short circuit, a short normally affects all nodes on the bus such that communication with all nodes is preempted. The fault isolation switch 125, however, allows most of the nodes on the bus to remain functional while helping to isolate the source of the short.

The fault isolation switch 125 may be implemented in any manner, such as by utilizing mechanical relays or semiconductors (such as MOSFETs). For example, a MOSFET may be implemented at low cost and low power consumption for two-conductor buses (such as a DALI bus). In other cases, such as when the bus coupled to the device includes more than two conductors, a mechanical relay may be advantageous since such relays are available with multiple contacts that can be connected to the conductors of the bus in order to disconnect the device from the bus.

In some bus architectures, if the fault isolation switch 125 is initially closed when the device 100 is installed, and a short circuit was present on the bus, then no power could be delivered to the node 100. Consequently, the node 100 may not be able to power up or open the fault isolation switch 125, preventing the fault from being isolated. Accordingly, in one embodiment, the fault isolation switch 125 is configured to remain open by default until configured into its closed position. During the power up phase, the node 100 will then close its fault isolation switch 125 and monitor for conditions of a fault. In the case of a DALI communication, the bus would appear shorted (no voltage) upon closing the fault isolation switch 125. As described in more detail below, a node 100 may also include circuitry to monitor the bus and determine other adverse conditions such as increases in noise. If a node 100 detects such conditions, it will open its fault isolation switch 125 again and thereby isolate the fault (which would otherwise prevent any communication). The node 100 would then (actively or upon request) communicate this condition to facilitate troubleshooting.

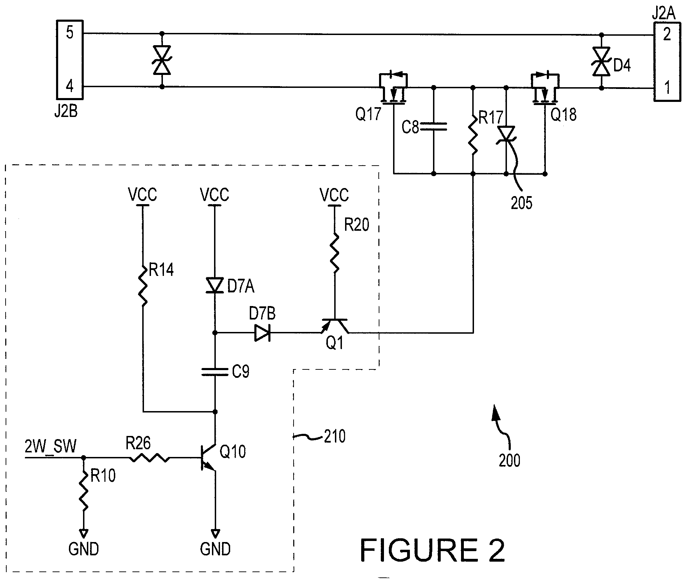

An exemplary embodiment of the fault isolation switch is depicted in Figure 2. In this embodiment, a fault isolation switch 200 includes connectors J2A and J2B that connect to a two-conductor bus via the bus interface 105 (shown in Figure 1). One conductor of the bus passes through from a terminal 5 to a terminal 2, while the other conductor passes from a terminal 4, via MOSFETs Q17 and Q18, to a terminal 1. The MOSFETs Q17 and Q18 may be controlled to either pass the signal or isolate the signal. The MOSFETs Q17 and Q18 are configured back-to-back such that the internal body diodes cannot form a conductive path. A capacitor C8 stores a voltage across a gate-source of each of the MOSFETs Q17 and Q18, while a resistor R17 discharges the capacitor C8 in order to open the fault isolation switch 200. A zener diode 205 protects the gates of the MOSFETs Q17 and Q18 from excessive voltage.

In operation, if the MOSFETs Q17 and Q18 interrupt the negative signal path, a gate voltage higher than the gate-source threshold voltage of the MOSFETs Q17 and Q18 is applied to turn them on. If the MOSFETs Q17 and Q18 interrupt the positive signal path, the voltage at the respective gates of the MOSFETs Q17 and Q18 must be higher than the sum of the gate-source-threshold and the positive signal amplitude. This higher voltage can be derived by a charge pump 210. In order to activate the charge pump 210, a microcontroller (not shown in Figure 2) toggles an input 2W_SW, in turn turning a transistor Q10 on and off. While the transistor Q10 is on, a capacitor C9 charges via a diode D7A to a source voltage VCC. While the transistor Q10 is off, a negative terminal of the capacitor C9 is raised to the source voltage VCC via a resistor R14. The capacitor C9 then discharges into a capacitor C8 via a diode D7B and a transistor Q1. Once the capacitor C8 is sufficiently charged, the MOSFETs Q17 and Q18 turn on. To turn off the fault isolation switch 200, the microcontroller ceases to toggle the input 2W_SW and the capacitor C8 discharges via the resistor R17. The transistor Q1 and a resistor R20 prevent turning on the fault isolation switch 200 in the configuration when the negative signal path is interrupted. Without it, the capacitor C8 would charge uncontrolled via the diodes D7A and D7B.

The device 100 may be configured to alternate its fault isolation switch 125 between the open state and closed state in any suitable manner. For example, the fault isolation switch 125 can be controlled via the microcontroller 115 of the device 100. Additionally (or alternately), the device 100 may be configured to alternate the states of the fault isolation switch 125 in response to a signal from another device via the bus. The device 100 may be configured to leave the fault isolation switch 125 in its open or closed state indefinitely (e.g., until receipt of a second signal indicating the fault isolation switch 125 should be alternated to the other state) or for a predetermined period of time and then alternate to the other state. The fault isolation switch 125may also be configured to remain in one state (e.g., the open state) for a predetermined period of time, after which it remains in the other state (e.g., the closed state) indefinitely.

The device 100 may be configured to detect any form of fault, such as wiring faults, short circuits between the conductors of the cable, open circuits, wire loops, breaks, and interference. Open and short circuits may be detected using the device 100 as described previously. Additionally, circuitry for detection of faults can be integrated into the device 100. Upon power up, the device 100 closes its fault isolation switch 125 and observes the bus. If the bus appears faulty, the device 100 is configured to open its fault isolation switch 125, thereby isolating the fault. In an embodiment, where the device 100 acts as a control device on the bus, the device 100 may be configured to instruct other nodes on the bus to temporarily close their respective fault isolation switches. During this time, the device 100 acting as a control device can assess the bus conditions to identify faults. After a predetermined period of time, or when instructed to by the device 100 acting as a control device, each node on the bus configures its fault isolation switch from the closed position to the open position. In some cases, such as where conditions are suitable for communication over the bus, the device 100 acting as a control device may instruct a node to permanently close its fault isolation switch in order to bring a fault condition to an installer's attention.

DETECTING BUS NETWORK TOPOLOGY

As discussed above, knowledge of the topology of a bus network is often very important. For example, in order to dim lights (e.g., connected to a DALI network in a building) in response to daylight, it can be important to know which of the lighting nodes are located near windows of the building and which lighting nodes are located interior to the building. In a conventional DALI installation, a software tool is used to show the unique address of each node that has been discovered on the bus. Installers then instruct the node to cycle its lights on and off and attempt to locate which lights are cycling on and off. In some instances, such as an open warehouse, this process is relatively efficient. In other cases, such as in an office building, it is often difficult to determine which lights are cycling without extensive manual investigation, making the process very time consuming and, consequently, very expensive.

Among other things, embodiments of this disclosure can help determine the topology of the bus network to expedite the process of physically locating nodes, particularly in cases (such as many lighting installations) where an installer connects nodes in an ordered fashion (e.g., the installer follows hallways and wires all the nodes within one office before moving to another). As the physical locations of nodes are determined, they can be entered into a floor plan through a user interface on a computer (whether portable, such as but not limited to a tablet, laptop, etc., or not portable, such as but not limited to a desktop computer) in a process called "mapping."

In one embodiment, nodes equipped with a fault isolation switch (such as the node 100 shown in Figure 1) can be used to determine the wiring topology, as well as to isolate faults as described above. In this embodiment, the fault isolation switches 125 of all devices 100 on a bus are opened. As a result, only a first node 100 directly connected to a master control unit can be seen on the bus, because all subsequent nodes are disconnected. A signal is sent by the master control unit to the first node 100 to configure its fault isolation switch 125 to the closed position, allowing the identification of the next subsequent node 100 on the bus. It is possible that two or more nodes 100 appear as a fault isolation switch 125 is closed, indicating that the communication bus has been branched, in which case each branch can be investigated separately. This procedure can also detect loops, where a communication bus branches off just to rejoin the initial branch at some location further down the bus.

In some embodiments, it is not necessary that all nodes on a bus include a fault isolation switch 125 or are otherwise capable of being selectively connected and disconnected from the bus in order to determine faults or topology. For example, the switch may be included in a subset of nodes to reduce system cost. In such cases, a specific fault may not be able to be traced to a single node 100, rather to a group of nodes 100. In practice, however, this uncertainty may not pose a problem where the nodes 100 in a group of nodes 100 are within a reasonable vicinity of each other.

In order to prevent nodes 100 far down the communication bus from being disconnected (and thus nonfunctional) for long periods of time during the topology detection process, each node 100 can be instructed to open its switch only temporarily. In one embodiment, the fault isolation switch 125 for each node 100 can be configured to remain open for a predetermined period of time such that the internal power supplies (or energy storage devices) of the nodes 100 can power the nodes 100. In a DALI lighting control system, for example, this allows the lighting to remain fully functional during the topology detection process. Moreover, as nodes 100 are added to the system, the location of the new node 100 relative to other nodes 100 can be determined without interrupting operation of the lighting control system. During the period of temporary disconnection, a command may be broadcast. For example, the command may instruct those nodes 100 that can still communicate to set a flag.

In one embodiment, the commands are relatively short such that the duration of the disconnection is likewise short. Then, when the fault isolation switch 125 is closed again, the system may determine which nodes 100 have their flag set and which do not. Those nodes 100 that don't have their flag set are located behind the node 100 that temporarily disconnected the fault isolation switch 125.

In an embodiment, nodes 100 may be configured to detect a temporary loss of power and set a flag upon such an event. One node 100 is then instructed to temporarily open the fault isolation switch 125, where upon nodes 100 behind the one node 100 set their flag. Then, when the fault isolation switch 125 is closed again, the system determines which nodes 100 saw the temporary disconnection and which did not.

In an embodiment, communications from nodes 100 on the bus can be monitored to determine the wiring topology of the bus. For example, a command can be issued onto the bus such that any nodes 100 that receive the command will respond with a communication (e.g., via transceiver 110). With knowledge of nodes 100 having their fault isolation switches 125 in the open or closed states, and by identifying the nodes 100 on the bus from which such a communication is received, (i.e., which nodes 100 saw the command and which did not) the bus topology can be determined.

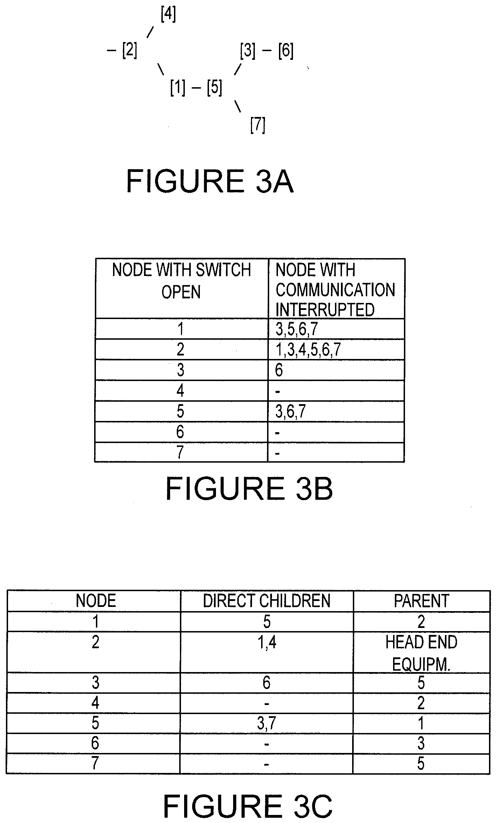

Figures 3A-3C illustrate an example of determining wiring topology according to embodiments. Figure 3A depicts the actual wiring topology of nodes [1] through [7], each of which is a node 100 as described herein. The fault isolation switch 125 for each node [1] through [7] is opened, and the nodes [1] through [7] with which communication is interrupted is determined. For example, referring now to Figure 3B, the fault isolation switch 125 for the node [1] is opened, resulting in communication with the nodes [3], [5], [6], and [7] being interrupted. The fault isolation switch 125 for the node [1] is then closed, and the fault isolation switch 125 for the node [2] is opened, and so forth through each of the nodes [1] through [7], yielding the table in Figure 3B.

Based on the results in Figure 3B, a group of child nodes (Y) for each node (X) is identified. For each of the child nodes (Y) in the group of child nodes (Y), those nodes (Y) from the group of child nodes (Y) that are also children of a child node (Y) are removed. For example, for the node X=[5], the group of children is the nodes [3], [6], and [7]. Removing the nodes from the group that appear as children of Y yields:

Y=[3] removes [6]
Y=[6] removes none
Y=[7] removes none.

The remaining children in the group are thus the nodes [3] and [7].

The remaining nodes, that is the nodes [3] and [7] in the above example, indicate the direct children of a node, that is the node [5]. As can be verified in the actual topology diagram in Figure 3A, the nodes [3] and [7] are indeed the direct children of the node [5]. Figure 3C depicts the results of this process for each of the nodes [1] through [7], which can be used to depict the topology of the bus (e.g., using a tree structure as shown in Figure 3A).

In certain embodiments, such as determining a bus topology for a computer system bus, it may be more desirable to identify the parent nodes rather than an arbitrary number of children, that is, identifying that a node Q is the parent of those nodes remaining in the group of children. In the above example with regards to Figures 3A-3C, the node [5] is parent to the nodes [3] and [7].

Additionally, or alternately, the topology of a bus can be determined based on monitoring the sequence in which devices are connected to the bus. As described earlier, embodiments can be used to determine bus topology while the system is operational. In such cases, the bus can be monitored and the addition of nodes detected and their sequence of addition noted. In this embodiment, the sequence in which nodes are connected to the system can be used to determine the wiring topology, particularly where the nodes are added in a daisy chain configuration. This method may also complement other topology scanning methods. For example, where (as described above) only a certain percentage of nodes include a fault isolation switch, the sequence in which nodes are added can help determine the topology in between the nodes with switches.

Additionally, the electrical characteristics of a bus of any suitable bus architecture may be used to help determine the wiring topology of the bus. In one embodiment, the topology of a DALI bus can be determined using the measured wiring impedance of the bus between a power supply coupled to the bus and a device coupled to the bus.

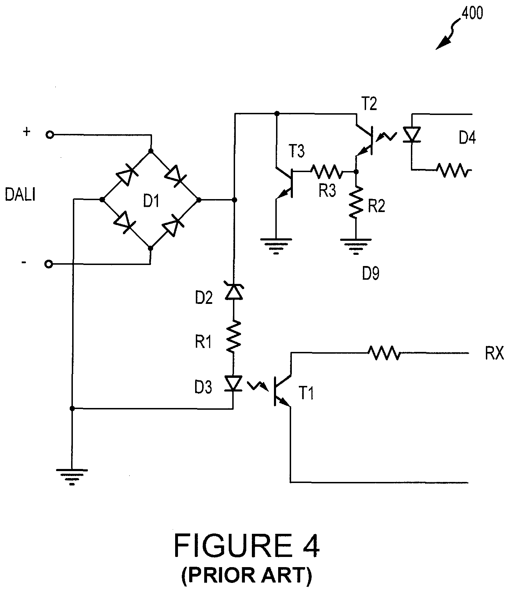

Figure 4 depicts a typical transceiver section 400 for a DALI node. In this example, a bridge rectifier D1 rectifies the DALI signal and makes the transceiver polarity insensitive. During a logical one, voltage is present at the DALI lines and is high enough so a Zener diode D2 conducts. Consequently, an LED D3 on the receive optocoupler illuminates and, a transistor T1 conducts. A microcontroller recognizes this via an RX pin. The resistor R1 limits current through the LED D3. During a logical zero, the voltage on the DALI line is too low for the Zener diode D2 to conduct, and therefore the LED D3 and the transistor T1 will be off.

As described previously, a node must short the DALI lines in order to generate a logical zero on the bus. During a logical one, the bus is simply left un-shorted. In order to create a logical zero, the microcontroller for the device (not shown) passes current through a diode D4, in turn causing a transistor T2 to conduct. In turn, a current is provided through a resistor R3 into a base of a transistor T3, which then shorts the DALI bus through the bridge rectifier D1.

At the power supply (not shown), a reading of current and voltage can be recorded while the DALI device shorts the bus. The voltage reading can be adjusted by an offset based on a characteristic such as the manufacturer, model, device type, and/or any other characteristic that may influence the measured voltage when the device communicates. In one embodiment, the device's manufacturer and model information is retrieved via the communication bus and a looked up in a database to obtain the offset for the device. Once the voltage has been adjusted, the wire impedance between the power supply and the device can be calculated according to Ohm's law. The wire impedance is proportional to the length of wire, allowing the distance to each node to be determined. This can thus help determine the wiring topology of a bus, even in cases where the nodes are not equipped with the above-described fault isolation switch.

In an example, referring again to Figure 4, the node creates a (largely current independent) voltage drop of two diode drops in the bridge rectifier D1 and another base-emitter drop in the transistor T3, or approximately 2.1 Volt (V[Offset]). During a logical zero, the power supply may lower the voltage to a level of V[zero] in order to limit the current to 250mA. The wiring impedance, which is proportional to the wire length l, is then derived via the following equation:

$$l \sim R = (\, V[zero] - V[offset]\,) / 250mA$$

NODE WITH INSTALLATION MODE

As discussed previously, a communications system can experience a variety of different fault conditions, many of which can be difficult to localize. Conventional diagnostic equipment is often expensive, delicate, and/or difficult to operate. Moreover, even when conventional systems detect a fault, determining the exact location of the fault can still be tedious and time consuming.

In one embodiment of the disclosure, a bus device (such as device 100 shown in Figure 1, with or without a fault isolation switch 125) is configured to power up in an "installation mode" to help identify faults as an installer wires the device to a live (powered) bus. As devices 100 are added to the bus as nodes 100, a system (such as a computer system coupled to the bus) monitors the bus and keeps an inventory of each node 100 and its type.

The computer system can further transmit a communication to the node 100, which is received by the node 100 (e.g., by transceiver 110). The communication is validated by the node 100 and, if the validation is successful (indicating the node 100 is functional and installed properly), the node 100 may activate one or more of its features. Features of a node 100 can be activated in any suitable manner, such as being alternately activated and deactivated repeatedly, activated for a predetermined period of time and then deactivated, and/or activated/ deactivated in combination with other features of the node 100. For example, keypads may feature LED indicators that generate a visual indicator (such as flashing the indicators a number of times). Nodes 100 connected to lighting devices may generate a visual indicator that includes cycling the lights on and off a number of times. The node 100 may also generated an audible indicator, such as a sound played through a speaker coupled to the node 100 or an audible "clicking" of a mechanical relay of the node 100 as it cycles lights. A node 100 may generate any combination of visual and/or audible indicators.

In this manner, the audible and/or visual indicators generated by the node 100 provide immediate feedback to the installer that the installation of the node 100 is (or remains) functional. If a node 100 fails to generate the indicators, the installer knows that a fault must be present between the last successfully detected node 100 and the recently installed node 100. This embodiment may also be particularly effective in detecting intermittent faults, such as may be caused by a loose or improperly seated connector.

In an embodiment directed to a lighting system, a plurality of devices coupled to a bus include a keypad and a lighting device. In response to a communication from the keypad over the bus (e.g., due to a button being pushed on a keypad), the lighting device is configured to alternate between two or more states. For example, the lighting device may cycle between the states of high brightness, low brightness, and off. Among other things, this cycling helps demonstrate to the installer that nodes are both capable of communication and correctly wired to the lighting device's ballast or LED driver. In this embodiment, any number of keypads and lighting devices can be tested. All lights can be cycled simultaneously, individually, or in groups.

The above-described embodiments may be implemented in any manner, such as through hardware, software, or a combination of the two. Functionality implemented through software may be performed by any suitable computer-based system. Such a software program may be stored on any computer-readable medium, such as floppy disks, hard disks, CD-ROMs, DVDs, any type of optical or magneti-optical disks, volatile or nonvolatile memory, and/or any other type of media suitable for storing electronic instructions and capable of interfacing with a computing device. Methods according to embodiments of present invention may operate in conjunction with any type of computer system, such as a personal computer (PC), server, cellular phone, personal digital assistant (PDA), portable computer (such as a laptop), embedded computing system, and/or any other type of computing device. The computer system may include any number of computing devices connected in any manner, such as through a distributed network. The computer system may communicate and/or interface with any number of users and/or other computing devices to send and receive any suitable information in any manner, such as via a local area network (LAN), cellular communication, radio, satellite transmission, a modem, the Internet, and/or the like.

The particular implementations shown and described above are illustrative of the invention and its best mode and are not intended to otherwise limit the scope of the present invention in any way. Indeed, for the sake of brevity, conventional data storage, data transmission, and other functional aspects of the systems may not be described in detail. Furthermore, the connecting lines shown in the various figures are intended to represent exemplary functional relationships and/or physical couplings between the various elements.

The term "non-transitory" is to be understood to remove only propagating transitory signals per se from the claim scope and does not relinquish rights to all standard computer-readable media that are not only propagating transitory signals per se. Stated another way, the meaning of the term "non-transitory computer-readable medium" should be construed to exclude only those types of transitory computer-readable media which were found in *In Re Nuijten* to fall outside the scope of patentable subject matter under 35 U.S.C. § 101.

Benefits, other advantages, and solutions to problems have been described herein with regard to specific embodiments. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to 'at least one of A, B, and C' or 'at least one of A, B, or C' is used in the claims or specification, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Although the disclosure includes a method, it is contemplated that it may be embodied as computer program instructions on a tangible computer-readable carrier, such as a magnetic or optical memory or a magnetic or optical disk. All structural, chemical, and functional equivalents to the elements of the above-described exemplary embodiments that are known to those of ordinary skill in the art are expressly incorporated herein by reference and are intended to be encompassed by the present claims. Moreover, it is not necessary for a device or method to address each and every problem sought to be solved by the present disclosure, for it to be encompassed by the present claims. Furthermore, no element, component, or method step in the present disclosure is intended to be dedicated to the public regardless of whether the element, component, or method step is explicitly recited in the claims. No claim element herein is to be construed under the provisions of 35 U.S.C. 112, sixth paragraph, unless the element is expressly recited using the phrase "means for." As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

**Claims**

1. A device (100), comprising:

   a bus interface (105) to connect the device (100) to a bus;
   a transceiver(110) to transmit and receive data via the bus over the bus interface(105); and
   a fault isolation switch (125) connected to the bus interface (105), wherein the fault isolation switch (105) has an open state and a closed state, such that when the fault isolation switch (105) is in the open state, the bus interface (105) is disconnected from the bus and the transceiver (110) is unable to transmit or receive data via the bus, and when the fault isolation switch (125) is in the closed state, the bus interface (105) is connected to the bus and the transceiver (110) is able to transmit and receive data via the bus, **characterized in that** the fault isolation switch (125) further comprises a fault detection circuit, wherein the fault detection circuit is configured to identify a fault associated with the bus, and to alternate the fault isolation switch (125) to the open state in response to identifying the fault.

2. The device (100) of claim 1, wherein the fault isolation switch (125) has an initial operation mode and a steady operation mode, and the fault isolation switch (125) is configured to default to the open state while in the initial operation mode.

3. The device (100) of claim 1, wherein the fault isolation switch (125) is configured to alternate between the open state and the closed state in response to a signal received from the bus via the bus interface (105), and
   preferably wherein the fault isolation switch (125) is configured to remain in the open state or the closed state until receipt of a second signal from the bus via the bus interface (105).

4. The device (100) of claim 1, further comprising a microcontroller, wherein the microcontroller is configured to control the device (100) and to provide output signals to a further device to which the device (100) is connected.

5. The device (100) of claim 1, wherein the fault isolation switch (125, 200) further comprises:

   a first connector (J2A) and a second connector (J2B);
   a first switch (Q17) and a second switch (Q18);
   a capacitor (C8), a resistor (R17), and a Zener diode (205) in parallel with each other and connected between the first switch (Q17) and the second switch (Q18); and
   a charge pump (210);
   wherein the charge pump (210) is configured, upon activation, to charge the capacitor (C8), turning the first switch (Q17) and the second switch (Q18) on, and thus turning on the fault isolation switch (125, 200), and upon deactivation, to allow the capacitor (C8) to discharge through the resistor (R17), turning the first switch (Q17) and the second switch (Q18) off, and thus turning off the fault isolation switch (125).

6. A system, comprising:

   a system bus;
   a power supply connected to the system bus;
   a plurality of devices (100) connected to the system bus, wherein each device in the plurality of devices is the device of claim 1
   a luminaire, wherein the luminaire comprises a light source to provide illumination and a lighting power source to provide power to illuminate the light source, and wherein the luminaire is connected to a device in the plurality of devices (100), such that operation of the luminaire is controlled by the connected device; and
   a control device, comprising:

      a bus interface to connect the control device to the system bus;
      a communications device connected to the system bus through the bus interface, the communications device configured to transmit and receive data via the bus interface;
      a processor connected to the bus interface and the communications device; and
      a memory system connected to the processor, wherein the memory system stores instructions that, when executed by the processor, cause the control device to perform operations of:

         receiving, from the system bus by the communications device via the bus interface, a communication from a device in the plurality of devices that is connected to the luminaire;
validating the communication to produce an action result; and
in response, based on the action result, transmitting a command to the device in the plurality of devices that is connected to the luminaire that causes the luminaire to generate a visual indicator via the light source of the luminaire.

7. The system of claim 6, wherein transmitting comprises:
in response, based on the action result, transmitting a command to the device in the plurality of devices (100) that is connected to the luminaire that causes the luminaire to generate a visual indicator by alternately activating and de-activating the light source of the luminaire.

8. The system of claim 6, wherein validating comprises:
validating the communication to produce an action result, wherein the action result includes a command to device in the plurality of devices (100) that is connected to the luminaire, wherein the command will cause the device to control the luminaire to generate a visual indicator via the light source of the luminaire; and wherein transmitting comprises:
in response, transmitting the command in the action result to the device in the plurality of devices (100) that is connected to the luminaire, such that the device controls the luminaire according to the transmitted command.

9. The system of claim 6, further comprising:
a lighting control device that is configured to receive input, wherein the lighting control device is connected to the luminaire, such that operation of the luminaire may be controlled by the lighting control device, the device in the plurality of devices (100) connected to the luminaire, or both the lighting control device and the device in the plurality of devices (100) connected to the luminaire, and wherein the lighting control device is connected to a device in the plurality of devices (100), such that operation of the lighting control device may be controlled by the received input, the connected device, or both the received input and the connected device;
and wherein the memory system stores instructions that, when executed by the processor, cause the control device to perform operations of:

receiving, from the system bus by the communications device via the bus interface, a communication from the device in the plurality of devices that is connected to the lighting control device;
validating the communication to produce an action result; and

in response, based on the action result, transmitting a command to the device in the plurality of devices (100) that is connected to the luminaire that causes the luminaire to operate based on the transmitted command to generate a visual indicator.

10. The system of claim 9, wherein transmitting comprises:
in response, based on the action result, transmitting a command to the device in the plurality of devices (100) that is connected to the lighting control device that causes the lighting control device to operate the luminaire based on the transmitted command to generate a visual indicator.

**Patentansprüche**

1. Eine Vorrichtung (100), aufweisend:

eine Bus-Schnittstelle (105) zum Verbinden der Vorrichtung (100) mit einem Bus;
einen Sendeempfänger (110) zum Übertragen und Empfangen von Daten über den Bus über die Bus-Schnittstelle (105); und
einen Fehler-Isolierschalter (125), welcher mit der Bus-Schnittstelle (105) verbunden ist, wobei der Fehler-Isolierschalter (105) einen Geöffnet-Zustand und einen Geschlossen-Zustand hat, sodass, wenn sich der Fehler-Isolierschalter (105) in dem Geöffnet-Zustand befindet, die Bus-Schnittstelle (105) von dem Bus getrennt ist und der Sendeempfänger (110) nicht in der Lage ist, Daten über den Bus zu übertragen oder zu empfangen, und wenn sich der Fehler-Isolierschalter (125) in dem Geschlossen-Zustand befindet, die Bus-Schnittstelle (105) mit dem Bus verbunden ist und der Sendeempfänger (110) in der Lage ist, Daten über den Bus zu übertragen und zu empfangen, **dadurch gekennzeichnet, dass** der Fehler-Isolierschalter (125) ferner eine Fehler-Detektionsschaltung aufweist, wobei die Fehler-Detektionsschaltung konfiguriert ist, um einen mit dem Bus assoziierten Fehler zu identifizieren und um den Fehler-Isolierschalter (125) als Antwort auf das Identifizieren des Fehlers in den Geöffnet-Zustand zu verändern.

2. Die Vorrichtung (100) gemäß Anspruch 1, wobei der Fehler-Isolierschalter (125) einen Anfang-Betriebsmodus und einen stationären Betriebsmodus hat, und wobei der Fehler-Isolierschalter (125) konfiguriert ist, um standardmäßig in dem Geöffnet-Zustand zu sein, während er sich in dem Anfang-Betriebsmodus befindet.

**3.** Die Vorrichtung (100) gemäß Anspruch 1, wobei der Fehler-Isolierschalter (125) konfiguriert ist, um zwischen dem Geöffnet-Zustand und dem Geschlossen-Zustand zu wechseln als Antwort auf ein Empfangen eines Signals von dem Bus über die Bus-Schnittstelle (105), und wobei vorzugsweise der Fehler-Isolierschalter (125) konfiguriert ist, um in dem Geöffnet-Zustand oder dem Geschlossen-Zustand zu bleiben, bis zum Empfangen eines zweiten Signals von dem Bus über die Bus-Schnittstelle (105).

**4.** Die Vorrichtung (100) gemäß Anspruch 1, ferner aufweisend einen Mikrokontroller, wobei der Mikrokontroller konfiguriert ist zum Steuern der Vorrichtung (100) und zum Bereitstellen von Ausgangssignalen an eine weitere Vorrichtung, mit der die Vorrichtung (100) verbunden ist.

**5.** Die Vorrichtung (100) gemäß Anspruch 1, wobei der Fehler-Isolierschalter (125, 200) ferner aufweist:

eine erstes Anschlusselement (J2A) und ein zweites Anschlusselement (J2B);
einen ersten Schalter (Q17) und einen zweiten Schalter (Q18);
einen Kondensator (C8), einen Widerstand (R17) und eine Zener-Diode (205), die miteinander parallel geschaltet sind und zwischen den ersten Schalter (Q17) und den zweiten Schalter (Q18) geschaltet sind; und
eine Ladepumpe (210);
wobei die Ladepumpe (210) konfiguriert ist, um bei Aktivierung den Kondensator (C8) zu laden, wodurch der erste Schalter (Q17) und der zweite Schalter (Q18) angeschaltet werden und somit der Fehler-Isolierschalter (125, 200) angeschaltet wird, und um bei Deaktivierung dem Kondensator (C8) zu erlauben, durch den Widerstand (R17) zu entladen, wodurch der erste Schalter (Q17) und der zweite Schalter (Q18) ausgeschaltet werden, und somit der Fehler-Isolierschalter (125) ausgeschaltet wird.

**6.** Ein System, aufweisend:

einen Systembus;
eine Stromversorgung, welche mit dem Systembus verbunden ist;
eine Mehrzahl von Vorrichtungen (100), die mit dem Systembus verbunden sind, wobei jede Vorrichtung in der Mehrzahl von Vorrichtungen die Vorrichtung gemäß Anspruch 1 ist;
eine Leuchte, wobei die Leuchte eine Lichtquelle zum Bereitstellen einer Illumination und eine Beleuchtung-Stromquelle zum Bereitstellen von Strom zum Illuminieren der Lichtquelle aufweist, und wobei die Leuchte mit einer Vorrichtung in der Mehrzahl von Vorrichtungen (100) verbunden ist, sodass ein Betrieb der Leuchte von der verbundenen Vorrichtung gesteuert wird; und eine Steuervorrichtung, aufweisend:

eine Bus-Schnittstelle zum Verbinden der Steuervorrichtung mit dem Systembus;

eine Kommunikationsvorrichtung, welche mit dem Systembus durch die Bus-Schnittstelle verbunden ist, wobei die Kommunikationsvorrichtung konfiguriert ist, um Daten über die Bus-Schnittstelle zu übertragen und zu empfangen;
einen Prozessor, welcher mit der Bus-Schnittstelle und der Kommunikationsvorrichtung verbunden ist; und

ein Speichersystem, welches mit dem Prozessor verbunden ist, wobei das Speichersystem Instruktionen speichert, die, wenn sie von dem Prozessor ausgeführt werden, bewirken, dass die Steuervorrichtung die folgenden Operationen durchführt:

Empfangen, von dem Systembus durch die Kommunikationsvorrichtung über die Bus-Schnittstelle, einer Kommunikation von einer Vorrichtung in der Mehrzahl von Vorrichtungen, die mit der Leuchte verbunden ist;
Validieren der Kommunikation zum Erzeugen eines Aktionsergebnisses; und als Antwort, basierend auf dem Aktionsergebnis, Übertragen eines Befehls an die mit der Leuchte verbundene Vorrichtung in der Mehrzahl von Vorrichtungen, der bewirkt, dass die Leuchte einen visuellen Indikator über die Lichtquelle der Leuchte erzeugt.

**7.** Das System gemäß Anspruch 6, wobei das Übertragen aufweist:

als Antwort, basierend auf dem Aktionsergebnis, Übertragen eines Befehls an die mit der Leuchte verbundene Vorrichtung in der Mehrzahl von Vorrichtungen (100), der bewirkt, dass die Leuchte durch wechselweises Aktivieren und Deaktivieren der Lichtquelle der Leuchte einen visuellen Indikator erzeugt.

**8.** Das System gemäß Anspruch 6, wobei das Validieren aufweist:

Validieren der Kommunikation zum Erzeugen eines Aktionsergebnisses, wobei das Aktionsergebnis einen Befehl an die mit der Leuchte verbundene Vorrichtung in der Mehrzahl von Vorrichtungen (100) aufweist, wobei der Befehl bewirken wird, dass die Vorrichtung die Leuchte steuert, um einen visuellen Indikator über die Lichtquelle der Leuchte zu erzeugen; und wobei das Übertragen aufweist: als Antwort, Übertragen des Befehls in dem Aktionsergebnis an die mit der Leuchte verbundene Vorrichtung in der Mehrzahl von Vorrichtungen (100), sodass die Vorrichtung die Leuchte gemäß dem übertragenen Befehl steuert.

9. Das System gemäß Anspruch 6, ferner aufweisend:

eine Beleuchtung-Steuerungsvorrichtung, die konfiguriert ist zum Empfangen einer Eingabe, wobei die Beleuchtung-Steuerungsvorrichtung mit der Leuchte verbunden ist, sodass ein Betrieb der Leuchte durch die Beleuchtung-Steuerungsvorrichtung, durch die mit der Leuchte verbundene Vorrichtung in der Mehrzahl von Vorrichtungen (100), oder durch beide, die Beleuchtung-Steuerungsvorrichtung und die mit der Leuchte verbundene Vorrichtung in der Mehrzahl von Vorrichtungen (100), gesteuert werden kann, und wobei die Beleuchtung-Steuerungsvorrichtung mit einer Vorrichtung in der Mehrzahl von Vorrichtungen (100) verbunden ist, sodass ein Betrieb der Beleuchtung-Steuerungsvorrichtung durch die empfangene Eingabe, durch die verbundene Vorrichtung oder durch beide, die empfangene Eingabe und die verbundene Vorrichtung, gesteuert werden kann; und wobei das Speichersystem Instruktionen speichert, die, wenn sie von dem Prozessor ausgeführt werden, bewirken, dass die Steuervorrichtung die folgenden Operationen durchführt:

Empfangen, von dem Systembus durch die Kommunikationsvorrichtung über die Bus-Schnittstelle, einer Kommunikation von der mit der Leuchte verbundenen Vorrichtung in der Mehrzahl von Vorrichtungen; Validieren der Kommunikation zum Erzeugen eines Aktionsergebnisses; und als Antwort, basierend auf dem Aktionsergebnis, Übertragen eines Befehls an die mit der Leuchte verbundene Vorrichtung in der Mehrzahl von Vorrichtungen (100), der bewirkt, dass die Leuchte basierend auf dem übertragenen Befehl betrieben wird, um einen visuellen Indikator zu erzeugen.

10. Das System gemäß Anspruch 9, wobei das Übertragen aufweist: als Antwort, basierend auf dem Aktionsergebnis, Übertragen eines Befehls an die mit der Beleuchtung-Steuerungsvorrichtung verbundene Vorrichtung in der Mehrzahl von Vorrichtungen (100), der bewirkt, dass die Beleuchtung-Steuerungsvorrichtung die Leuchte basierend auf dem übertragenen Befehl betreibt, um einen visuellen Indikator zu erzeugen.

## Revendications

1. Dispositif (100), comprenant :

une interface de bus (105) pour connecter le dispositif (100) à un bus ; un émetteur-récepteur (110) pour transmettre et recevoir des données par l'intermédiaire du bus sur l'interface de bus (105) ; et un commutateur d'isolation de défaut (125) connecté à l'interface de bus (105), où le commutateur d'isolation de défaut (105) a un état ouvert et un état fermé, de manière à ce que lorsque le commutateur d'isolation de défaut (105) est dans l'état ouvert, l'interface de bus (105) est déconnectée du bus et l'émetteur-récepteur (110) est incapable de transmettre ou de recevoir des données par l'intermédiaire du bus, et lorsque le commutateur d'isolation de défaut (125) est dans l'état fermé, l'interface de bus (105) est connectée au bus et l'émetteur-récepteur (110) est capable de transmettre et de recevoir des données par l'intermédiaire le bus, **caractérisé en ce que** le commutateur d'isolation de défaut (125) comprend en outre un circuit de détection de défaut, où le circuit de détection de défaut est configuré pour identifier un défaut associé au bus, et pour faire passer le commutateur d'isolation de défaut (125) dans l'état ouvert en réponse à l'identification du défaut.

2. Dispositif (100) selon la revendication 1, dans lequel le commutateur d'isolation de défaut (125) a un mode de fonctionnement initial et un mode de fonctionnement régulier, et le commutateur d'isolation de défaut (125) est configuré pour passer par défaut dans l'état ouvert pendant le mode de fonctionnement initial.

3. Dispositif (100) selon la revendication 1, dans lequel le commutateur d'isolation de défaut (125) est configuré pour alterner entre l'état ouvert et l'état fermé en réponse à un signal reçu du bus par l'intermédiaire de l'interface bus (105), et de préférence, dans lequel le commutateur d'isolation de défaut (125) est configuré pour rester dans l'état ouvert ou dans l'état fermé jusqu'à réception d'un second signal du bus par l'intermédiaire l'interface de bus (105).

**4.** Dispositif (100) selon la revendication 1, comprenant en outre un microcontrôleur, dans lequel le microcontrôleur est configuré pour contrôler le dispositif (100) et pour fournir des signaux de sortie à un autre dispositif auquel le dispositif (100) est connecté.

**5.** Dispositif (100) selon la revendication 1, dans lequel le commutateur d'isolation de défaut (125, 200) comprend en outre :

un premier connecteur (J2A) et un second connecteur (J2B) ;
un premier commutateur (Q17) et un second commutateur (Q18) ;
un condensateur (C8), une résistance (R17) et une diode Zener (205) en parallèle l'un par rapport à l'autre, et connectés entre le premier commutateur (Q17) et le second commutateur (Q18) ; et
une pompe de charge (210) ;
où la pompe de charge (210) est configurée, lors de l'activation, pour charger le condensateur (C8), en mettant en marche le premier commutateur (Q17) et le second commutateur (Q18), et en mettant ainsi en marche le commutateur d'isolement de défaut (125, 200) et, lors de la désactivation, pour permettre au condensateur (C8) de se décharger à travers la résistance (R17), en mettant le premier commutateur (Q17) et le second commutateur (Q18) hors circuit, et en mettant ainsi hors circuit le commutateur d'isolement de défaut (125).

**6.** Système, comprenant :

un bus système ;
une alimentation électrique connectée au bus système ;
une pluralité de dispositifs (100) connectés au bus système, où chaque dispositif de la pluralité de dispositifs est le dispositif selon la revendication 1, un luminaire, où le luminaire comprend une source de lumière pour fournir un éclairage et une source de puissance d'éclairage pour fournir une puissance pour éclairer la source de lumière, et où le luminaire est connecté à un dispositif de la pluralité de dispositifs (100), de manière à ce que le fonctionnement du luminaire soit contrôlé par le dispositif connecté ; et
un dispositif de contrôle, comprenant :

une interface de bus pour connecter le dispositif de contrôle au bus système ;
un dispositif de communication connecté au bus système par l'interface de bus, le dispositif de communication étant configuré pour transmettre et recevoir des données par l'intermédiaire de l'interface de bus ;

un processeur connecté à l'interface de bus et au dispositif de communication ; et
un système de mémoire connecté au processeur, où le système de mémoire stocke des instructions qui, lorsqu'elles sont exécutées par le processeur, amènent le dispositif de contrôle à exécuter les opérations suivantes :

recevoir, depuis le bus système, par le dispositif de communication, par l'intermédiaire de l'interface de bus, une communication provenant d'un dispositif de la pluralité de dispositifs qui est connecté au luminaire ;
valider la communication pour produire un résultat d'action ; et
en réponse, sur la base du résultat de l'action, transmettre une commande au dispositif de la pluralité de dispositifs qui est connecté au luminaire et qui amène le luminaire à générer un indicateur visuel par l'intermédiaire de la source lumineuse du luminaire.

**7.** Système selon la revendication 6, dans lequel la transmission comprend :
en réponse, sur la base du résultat de l'action, à la transmission d'une commande au dispositif de la pluralité de dispositifs (100) qui est connecté au luminaire et qui amène le luminaire à générer un indicateur visuel en activant et en désactivant alternativement la source lumineuse du luminaire.

**8.** Système selon la revendication 6, dans lequel la validation comprend :
de valider la communication pour produire un résultat d'action, où le résultat d'action comprend une commande à un dispositif de la pluralité de dispositifs (100) qui est connecté au luminaire, où la commande amènera le dispositif à contrôler le luminaire pour générer un indicateur visuel par l'intermédiaire de la source lumineuse du luminaire ; et où la transmission comprend :
en réponse, de transmettre la commande dans le résultat de l'action au dispositif de la pluralité de dispositifs (100) qui est connecté au luminaire, de manière à ce que le dispositif contrôle le luminaire selon la commande transmise.

**9.** Système selon la revendication 6, comprenant en outre :

un dispositif de contrôle d'éclairage qui est configuré pour recevoir une entrée, où le dispositif de contrôle d'éclairage est connecté au luminaire, de manière à ce que le fonctionnement du luminaire puisse être contrôlé par le dispositif de contrôle d'éclairage, le dispositif de la pluralité de dispositifs (100) connecté au luminaire, ou à la fois le dispositif de contrôle d'éclairage et le dispositif de la pluralité de dispositifs (100) connecté au luminaire, et où le dispositif de contrôle d'éclairage est connecté à un dispositif de la pluralité de dispositifs (100), de manière à ce que le fonctionnement du dispositif de contrôle d'éclairage puisse être contrôlé par l'entrée reçue, le dispositif connecté ou à la fois l'entrée reçue et le dispositif connecté ;

et dans lequel le système de mémoire stocke des instructions qui, lorsqu'elles sont exécutées par le processeur, amènent le dispositif de contrôle à exécuter les opérations suivantes :

recevoir, depuis le bus système, par le dispositif de communication, par l'intermédiaire de l'interface de bus, une communication provenant du dispositif de la pluralité de dispositifs qui est connecté au dispositif de contrôle d'éclairage ;

valider la communication pour produire un résultat d'action ; et

en réponse, sur la base du résultat de l'action, transmettre une commande au dispositif de la pluralité de dispositifs (100) qui est connecté au luminaire qui amène le luminaire à fonctionner sur la base de la commande transmise pour générer un indicateur visuel.

10. Système selon la revendication 9, dans lequel la transmission comprend :

en réponse, sur la base du résultat de l'action, de transmettre une commande au dispositif de la pluralité de dispositifs (100) qui est connecté au dispositif de contrôle d'éclairage qui amène le dispositif de contrôle d'éclairage à fonctionner sur la base de la commande transmise pour générer un indicateur visuel.

FIGURE 1

FIGURE 2

```
                        [4]
                       /
      — [2]           /          [3] — [6]
              \                /
               [1] — [5]      /
                          \
                           [7]
```

# FIGURE 3A

| NODE WITH SWITCH OPEN | NODE WITH COMMUNICATION INTERRUPTED |
|---|---|
| 1 | 3,5,6,7 |
| 2 | 1,3,4,5,6,7 |
| 3 | 6 |
| 4 | - |
| 5 | 3,6,7 |
| 6 | - |
| 7 | - |

# FIGURE 3B

| NODE | DIRECT CHILDREN | PARENT |
|---|---|---|
| 1 | 5 | 2 |
| 2 | 1,4 | HEAD END EQUIPM. |
| 3 | 6 | 5 |
| 4 | - | 2 |
| 5 | 3,7 | 1 |
| 6 | - | 3 |
| 7 | - | 5 |

# FIGURE 3C

# FIGURE 4
## (PRIOR ART)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20020108076 A1

- US 6121874 A